Europäisches Patentamt

European Patent Office

Office européen des brevets

(19)

(11) Veröffentlichungsnummer: **0 039 462**
**B1**

(12) # EUROPÄISCHE PATENTSCHRIFT

(45) Veröffentlichungstag der Patentschrift:
13.04.83

(51) Int. Cl.³: **F 16 H 5/76, A 01 D 90/14**

(21) Anmeldenummer: **81103139.2**

(22) Anmeldetag: **27.04.81**

(54) **Schaltgetriebe, insbesondere für den Antrieb des Querförderbandes eines Erntewagens.**

(30) Priorität: **02.05.80 DE 3016997**

(43) Veröffentlichungstag der Anmeldung:
**11.11.81 Patentblatt 81/45**

(45) Bekanntmachung des Hinweises auf die Patenterteilung:
**13.04.83 Patentblatt 83/15**

(84) Benannte Vertragsstaaten:
**AT CH FR GB IT LI NL**

(56) Entgegenhaltungen:
**AT-B-344 516
DE-A-1 962 108
DE-A-2 130 424
DE-A-2 313 366
FR-A-2 330 073
US-A-3 691 867
US-A-4 069 900**

(73) Patentinhaber: **Klöckner-Humboldt-Deutz AG
Zweigniederlassung Fahr, D-7702 Gottmadingen (DE)**

(72) Erfinder: **Schildbach, Wolfgang, Schrotzburgstr. 7,
D-7702 Gottmadingen (DE)**

(74) Vertreter: **Patentanwälte Leinweber & Zimmermann,
Rosental 7/II Aufg., D-8000 München 2 (DE)**

## Schaltgetriebe, insbesondere für den Antrieb des Querförderbandes eines Erntewagens

Die Erfindung bezieht sich auf ein Schaltgetriebe, insbesondere für den Antrieb des Querförderbandes eines Erntewagens, mit einem Schalthebel, von dem aus über eine Schaltstange ein auf einer Abtriebswelle drehschlüssig verschiebbarer Schaltring mit Klauen aus einer mittleren Aus-Stellung wahlweise mit einem von zwei beiderseits auf der Abtriebswelle frei drehbar gelagerten, gegenläufig angetriebenen Getrieberädern in Eingriff bringbar ist.

In vielen Bereichen der Technik, vor allem auf dem Gebiet der Landwirtschaft, spielt das Problem der Umsteuerung eines derartigen Getriebes eine wesentliche Rolle, da es schwierig ist, mit Hilfe eines beispielsweise von einem Fahrersitz zum Schalthebel führenden Bedienungsgestänges bzw. -seilzuges den Schaltring genau in eine der beiden Kupplungsstellungen zu führen bzw. die mittlere Aus-Stellung einwandfrei einzuhalten.

Der Gedanke, mit Rastvorrichtungen zu arbeiten, die das genaue Einhalten der verschiedenen Betriebsstellungen erleichtern, läßt sich auf vielen Gebieten wegen des hohen Aufwandes nicht realisieren. Auch die bei Werkzeugmaschinen zum Einsatz gelangenden, ausreichend präzise arbeitenden Schrittschaltwerke scheiden wegen des hohen Aufwandes und der damit verbundenen Kosten aus.

Bekannt sind ferner preisgünstige elektrische Stellmotoren; diese arbeiten jedoch nicht mit der erforderlichen Genauigkeit. Bei ihrem Einsatz zur Steuerung des Schaltringes besteht deshalb die Gefahr, daß er nicht genügend exakt in die mittlere Aus-Stellung übergeführt wird, was eine Funktionsbeeinträchtigung und sogar eine Zerstörung des Schaltgetriebes zur Folge haben kann.

Der Erfindung liegt die Aufgabe zugrunde, das Schaltgetriebe der eingangs genannten Art so weiter auszugestalten, daß auf besonders einfache Weise die Überführung in die gewünschte Einschaltstellung und insbesondere die Einhaltung der mittleren Aus-Stellung durch den Schaltring gewährleistet ist.

Das Schaltgetriebe nach der Erfindung, bei dem diese Aufgabe gelöst ist, zeichnet sich im wesentlichen dadurch aus, daß dem Schalthebel ein Vorwahlhebel zugeordnet ist, über den eine an letzterem angreifende erste Feder den Schalthebel in der vorgewählten Richtung beaufschlagt und gegen einen Schaltschieber drückt, der zwischen einem ersten und einem zweiten Endanschlag verschiebbar ist und unter der Wirkung einer an ihm angreifenden zweiten Feder am ersten Endanschlag anliegt und dabei den Schalthebel in der mittleren Aus-Stellung und gleichzeitig die erste Feder in gespanntem Zustand hält, bis der Schaltschieber bei Umsteuerung eines am freien Ende der zweiten Feder angreifenden und ihn am ersten Endanschlag in Anlage haltenden Stellgliedes unter Mitnahme durch die erste Feder bei gleichzeitiger Schalthebelverschwenkung am zweiten Endanschlag in Anlage gelangt.

Bei einem derartigen Getriebe ist der Schaltring aus einer der beiden Einschaltstellungen mit Hilfe des Stellgliedes in Form des einfachen Bedienungsgestänges oder -seilzuges einwandfrei in die mittlere Aus-Stellung überführbar bzw. in die vorgewählte Betriebsstellung zurückführbar. Die Vorwahl wird normalerweise bei in mittlerer Aus-Stellung befindlichem Schalthebel und damit Schaltring vorgenommen. Die Drehrichtung läßt sich jedoch auch im eingeschalteten Zustand durch Umlegen des Vorwahlhebels wechseln. Als Stellglied kann auch eine hydraulisch betätigbare Kolben-Zylinder-Einheit Anwendung finden. Als besonders vorteilhaft hat sich jedoch eine Ausführung erwiesen, bei der das Stellglied ein einfacher elektrischer Stellmotor ist. Ein derartiger Stellmotor ist sehr robust und billig in der Herstellung. Sein Nachteil, daß seine beiden Endstellungen innerhalb eines weiten Toleranzbereiches liegen, kann sich bei Anordnung in Verbindung mit der erfindungsgemäßen Vorwahlhebel-Schaltschieber-Einheit jedoch nicht ungünstig auswirken.

Als in baulicher Hinsicht sehr vorteilhaft hat sich eine Konstruktion erwiesen, bei der der mit der Schaltstange fest verbundene Schalthebel zweiarmig ausgebildet ist und auf jedem der beiden sich von der Schaltstange ausgehend nach entgegengesetzten Seiten hin erstreckenden Arme einen Anschlagzapfen trägt, an dem sich der lediglich im Bereich zwischen den beiden Anschlagzapfen unter Durchlauf einer Schwenkstellung mit maximaler Beaufschlagung der an ihm angreifenden ersten Feder verschwenkbare Vorwahlhebel unter der Wirkung dieser ersten Feder jeweils abstützt. Dabei hat es sich im Hinblick auf eine Vereinfachung der Konstruktion als besonders günstig erwiesen, wenn der Vorwahlhebel auf der Schaltstange frei drehbar gelagert ist.

Weitere Einzelheiten, Vorteile und Merkmale der Erfindung ergeben sich aus der folgenden Beschreibung und der Zeichnung, auf die bezüglich aller nicht im Text beschriebenen Einzelheiten ausdrücklich verwiesen wird. Es zeigt

Fig. 1 eine Seitenansicht des Schaltgetriebes,

Fig. 2 eine Draufsicht auf das Schaltgetriebe, teilweise im Schnitt entsprechend der Linie II-II der Fig. 1, und

Fig. 3 eine Draufsicht auf die Schalthebel-Vorwahlhebel-Anordnung des Schaltgetriebes nach Fig. 1.

Wie aus der Zeichnung ersichtlich, umfaßt das veranschaulichte Schaltgetriebe eine Abtriebswelle 1, auf der ein Schaltring 2 drehschlüssig verschiebbar gelagert ist. Beiderseits des Schaltringes 2 sind Getrieberäder 3 bzw. 4 auf der Abtriebswelle 1 frei drehbar gelagert. Der Schaltring 2 weist an seinem Umfang eine Ringnut 5 auf, in die Zapfen 6 einer Schaltgabel 7 eingreifen. Diese Schaltgabel 7 ist an einer Schaltstange 8 festgelegt, die im Getriebegehäuse 9 um ihre Achse verschwenkbar gelagert ist. Auf der Schaltstange 8 ist ein Schalthebel 10 festgelegt, bei dessen Verschwenkung über die Schaltgabel 7 der Schaltring 2 auf der Abtriebswelle 1 axial verschoben wird. Sowohl der Schaltring 2 als auch die beiden Getrieberäder 3 und 4 weisen seitliche Klauen 11 auf, die bei Überführung des Schaltringes 2 aus der mittleren Aus-Stellung in eine der beiden seitlichen Betriebsstellungen für eine drehschlüssige Verbindung jeweils eines der beiden Getrieberäder 3 oder 4 mit dem Schaltring 2 und damit der Abtriebswelle 1 sorgen. Parallel zur Abtriebswelle 1 ist im Schaltgetriebe eine Antriebswelle 12 gelagert. Auf dieser Antriebswelle 12 ist ein Ritzel 13 fest angeordnet, das mit dem einen als Stirnzahnrad ausgebildeten Getrieberad 4 über zwei zwischengeschaltete Ritzel 14 und 15 in Eingriff steht. Das als Kettenrad ausgebildete Getrieberad 3 steht mit der Antriebswelle 12 über ein auf letzterer fest angeordnetes Kettenrad 16 und eine nicht näher gezeigte Kette in Antriebsverbindung.

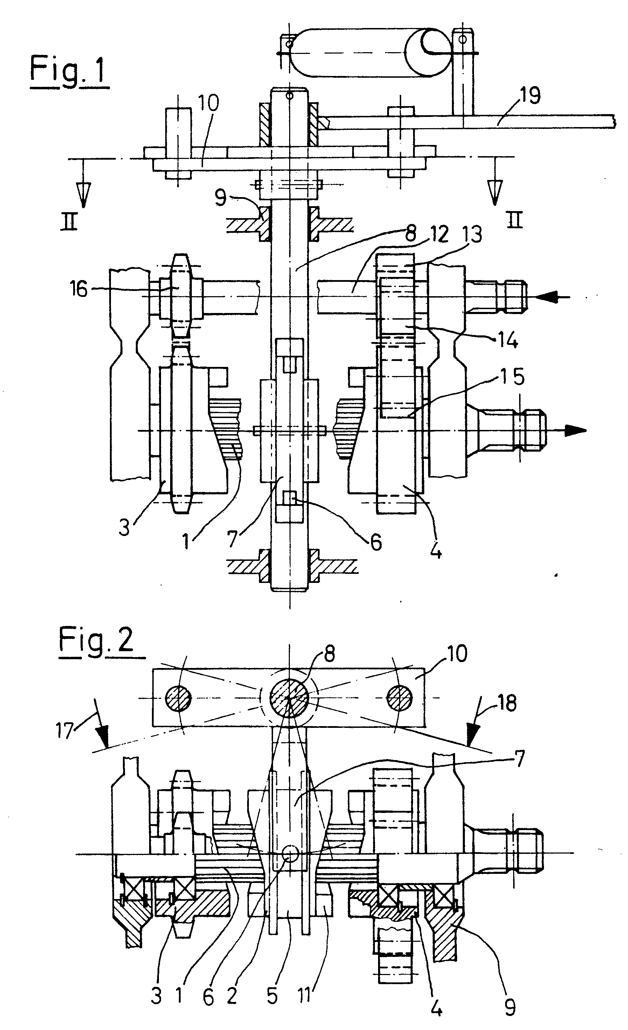

Bei Verschwenkung des Schalthebels 10 im Sinne des Pfeils 17 gelangt der Schaltring 2 über seine Klauen 11 mit dem Getrieberad 4 in Kupplungseingriff. Die Abtriebswelle 1 steht dann über dem Schaltring 2, die Klauen 11, das Getrieberad 4 und die Ritzel 13 bis 15 mit der Antriebswelle 12 in Verbindung. Wird der Schalthebel 10 statt dessen aus der in Fig. 2 veranschaulichten mittleren Aus-Stellung in Richtung des Pfeils 18 verschwenkt, dann gelangt das Getrieberad 3 über die Klauen 11 mit dem Schaltring 2 in Kupplungseingriff. Die Abtriebswelle 1 wird in diesem Fall über den Schaltring 2, die Klauen 11, das Getrieberad 3 und das Kettenrad 16 von der Antriebswelle 12 in entgegengesetztem Drehsinn angetrieben.

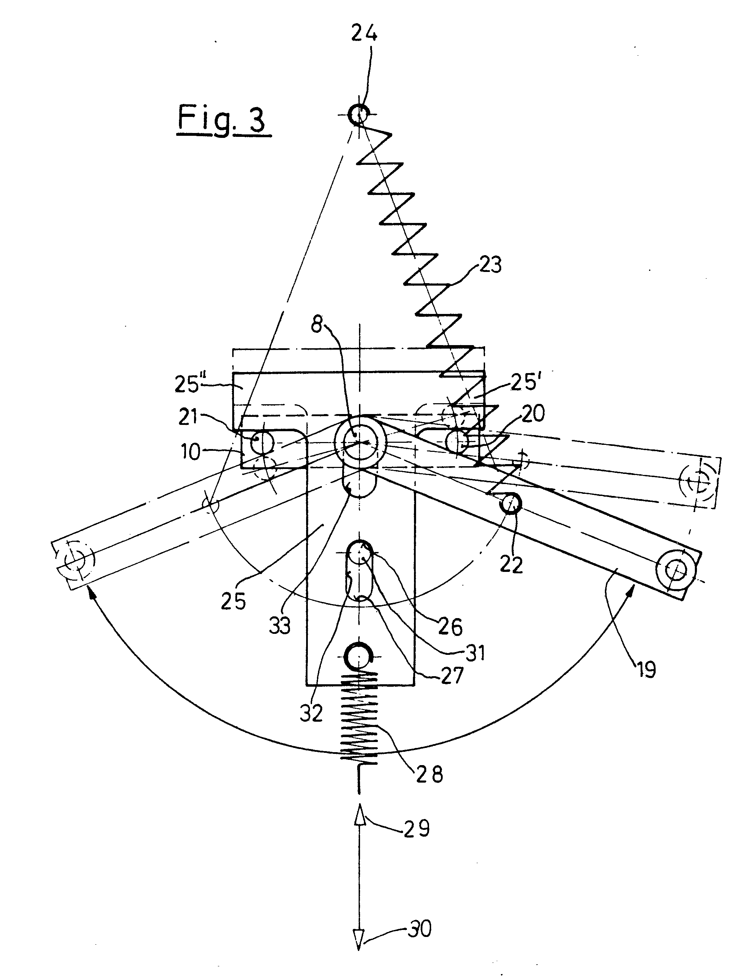

Um die Drehrichtung vorwählen zu können, ist dem Schalthebel 10 ein Vorwahlhebel 19 zugeordnet. Dieser Vorwahlhebel 19 ist auf der Schaltstange 8 frei drehbar gelagert. Wie aus Fig. 3 ersichtlich, ist die Schwenkbahn des Vorwahlhebels 19 durch Anschlagzapfen 20 bzw. 21 auf den beiden Hebelarmen des Schalthebels 10 begrenzt. An der Oberseite des Vorwahlhebels 19 ist ein Stift 22 festgelegt, an das eine Ende einer ersten Feder 23 angreift, deren anderes Ende derart mit einem festen Punkt 24 des Getriebes verbunden ist, daß der Vorwahlhebel 19 bei Überführung aus derjenigen Stellung, in der er unter der Wirkung der ersten Feder 23 am Zapfen 20 des Schalthebels 10 anliegt, in die Anlageposition am Zapfen 21 des Schalthebels 10 eine Schwenkstellung mit maximaler Beaufschlagung der an ihm angreifenden ersten Feder 23 durchläuft. Bei den beiden Vorwahlstellungen des Vorwahlhebels 19 handelt es sich deshalb um stabile Stellungen.

Aus Fig. 3 geht ferner hervor, daß dem Schalthebel 10 ein etwa T-förmiger Schaltschieber 25 zugeordnet ist, der zwischen einem ersten Endanschlag 26 und einem zweiten Endanschlag 27 verschiebbar ist. Dieser Schaltschieber 25 liegt unter der Wirkung einer an ihm angreifenden zweiten Feder 28 am ersten Endanschlag 26 an. Mit jeweils einem der beiden Schenkel 25' bzw. 25" beaufschlagt der Schaltschieber 25 über den Zapfen 20 bzw. 21 den Schalthebel 10 derart, daß er in der mittleren Aus-Stellung gehalten wird. Gleichzeitig beaufschlagt der Zapfen 20 bzw. 21 den wiederum an ihm anliegenden Vorwahlhebel 19 derart, daß die an ihm angreifende erste Feder 23 in gespanntem Zustand gehalten wird.

In Fig. 3 ist mit den Pfeilen 29 und 30 die Wirkung eines nicht näher veranschaulichten Stellgliedes schematisch veranschaulicht, das am freien Ende der zweiten Feder 28 angreift und den Schaltschieber 25 am ersten Endanschlag 26 in Anlage hält. Wird das Stellglied im Sinne des Pfeils 29 umgesteuert, dann führt die erste Feder 23 den Vorwahlhebel 19 und damit den Schaltschieber 25 über den Zapfen 20 bzw. 21 in die in strichpunktierten Linien veranschaulichte zweite Stellung, d. h., in Anlage am zweiten Endanschlag 27. Der Schalthebel 10 wird dabei verschwenkt, beispielsweise in die in Fig. 3 in strichpunktierten Linien veranschaulichte Lage, die einer Verschwenkung im Sinne des Pfeils 17 gemäß Fig. 2 entspricht.

Fig. 3 zeigt, daß der Schaltschieber ein von einem vorrichtungsfesten Zapfen 31 durchsetztes, der Schieberführung dienendes und mit seinen Enden die Endanschläge 26 bzw. 27 bildendes Langloch 32 aufweist. Ein weiteres Langloch 33 ist von dem einen Ende der Schaltstange 8 durchsetzt, die zusammen mit dem Zapfen 31 sicherstellt, daß der Schaltschieber 25 lediglich eine translatorische Bewegung ausführen kann. Das das Langloch 33 durchsetzende Ende der Schaltstange 8 dient dabei der Aufnahme des Schwenklagers des Vorwahlhebels 19.

Bezugszeichenaufstellung:

| | |
|---|---|
| 1 | Abtriebswelle |
| 2 | Schaltring |
| 3 | Getrieberad |
| 4 | Getrieberad |
| 5 | Ringnut |
| 6 | Zapfen |
| 7 | Schaltgabel |
| 8 | Schaltstange |
| 9 | Getriebegehäuse |
| 10 | Schalthebel |
| 11 | Klauen |
| 12 | Antriebswelle |
| 13 | Ritzel |
| 14 | Ritzel |
| 15 | Ritzel |
| 16 | Kettenrad |
| 17 | Pfeil |

| | |
|---|---|
| 18 | Pfeil |
| 19 | Vorwahlhebel |
| 20 | Anschlagzapfen |
| 21 | Anschlagzapfen |
| 22 | Stift |
| 23 | erste Feder |
| 24 | fester Punkt |
| 25 | Schaltschieber |
| 25', 25'' | Schenkel |
| 26 | 1. Endanschlag |
| 27 | 2. Endanschlag |
| 28 | zweite Feder |
| 29, 30 | Pfeile |
| 31 | Zapfen |
| 32 | Langloch |
| 33 | Langloch |

## Patentansprüche

1. Schaltgetriebe, insbesondere für den Antrieb des Querförderbandes eines Erntewagens mit einem Schalthebel (10), von dem aus über eine Schaltstange (8) ein auf einer Abtriebswelle (1) drehschlüssig verschiebbarer Schaltring (2) mit Klauen (11) aus einer mittleren Aus-Stellung wahlweise mit einem von zwei beiderseits auf der Abtriebswelle (1) frei drehbar gelagerten, gegenläufig angetriebenen Getrieberädern (3, 4) in Eingriff bringbar ist, dadurch gekennzeichnet, daß dem Schalthebel (10) ein Vorwahlhebel (19) zugeordnet ist, über den eine an letzterem angreifende erste Feder (23) den Schalthebel (10) in der vorgewählten Richtung beaufschlagt und gegen einen Schaltschieber (25) drückt, der zwischen einem ersten und einem zweiten Endanschlag (26, 27) verschiebbar ist und unter der Wirkung einer an ihm angreifenden zweiten Feder (28) am ersten Endanschlag (26) anliegt und dabei den Schalthebel (10) in der mittleren Aus-Stellung und gleichzeitig die erste Feder (23) in gespanntem Zustand hält, bis der Schaltschieber (25) bei Umsteuerung eines am freien Ende der zweiten Feder (28) angreifenden und ihn am ersten Endanschlag in Anlage haltenden Stellgliedes unter Mitnahme durch die erste Feder (23) bei gleichzeitiger Schalthebelverschwenkung am zweiten Endanschlag (27) in Anlage gelangt.

2. Schaltgetriebe nach Anspruch 1, dadurch gekennzeichnet, daß das Stellglied ein einfacher elektrischer Stellmotor ist.

3. Schaltgetriebe nach Anspruch 1, dadurch gekennzeichnet, daß der mit der Schaltstange (8) fest verbundene Schalthebel (10) zweiarmig ausgebildet ist und auf jedem der beiden sich von der Schaltstange (8) ausgehend nach entgegengesetzten Seiten hin erstreckenden Arme einen Anschlagzapfen (20, 21) trägt, an dem sich der lediglich im Bereich zwischen den beiden Anschlagzapfen (20, 21) unter Durchlauf einer Schwenkstellung mit maximaler Beaufschlagung der an ihm angreifenden ersten Feder (23) verschwenkbare Vorwahlhebel (19) unter der Wirkung dieser ersten Feder (23) jeweils abstützt.

4. Schaltgetriebe nach Anspruch 1 oder 2, dadurch gekennzeichnet, daß der Vorwahlhebel (19) auf der Schaltstange (8) frei drehbar gelagert ist.

5. Schaltgetriebe nach einem der Ansprüche 1 bis 4, dadurch gekennzeichnet, daß der Schaltschieber (25) mindestens ein von einem vorrichtungsfesten Zapfen (31) durchsetztes, der Schieberführung dienendes und mit seinen Enden die Endanschläge (26, 27) bildendes Langloch (32) aufweist.

6. Schaltgetriebe nach Anspruch 5, dadurch gekennzeichnet, daß im Schaltschieber (25) zwei Langlöcher (32, 33) vorgesehen sind, von denen eines von dem einen Ende der Schaltstange (8) durchsetzt ist.

7. Schaltgetriebe nach Anspruch 6, dadurch gekennzeichnet, daß das das Langloch (33) durchsetzende Ende der Schaltstange (8) der Aufnahme des Schwenklagers des Vorwahlhebels (19) dient.

## Claims

1. A gear box, more specially for driving a transverse conveyor on a harvesting vehicle, with a gear lever (10), by way of which, using a change speed rod (8), a change speed ring (2), that may be moved along a driving shaft (1), with which it is torque-transmittingly joined, may be moved, said ring (2) having dogs (11), said motion of said ring (2) being from a middle out-of-gear position into mesh with one of two gear wheels (3, 4) freely running on the said shaft (1) to the two sides of the ring (2), said gear wheels (3, 4) being driven in opposite directions, characterized in that there is a pre-selector lever (19) fesigned for use with said gear lever (10), and by way of the lever (19) a first spring (23), acting on the pre-selector lever (19), takes effect on the gear lever (10) loading it in a pre-selected direction, it so forcing the lever (10) towards a change gear slide (25), that may be moved between a first and a second end stop (26, 27), and under the effect of a second spring (28) acting on it is rested against the first end stop (26), it then keeping the gear lever (10) in the middle out-of-gear position and at the same time keeps the first spring (23) in the stressed condition till the change gear slide (25) comes up against the second end stop (27) by being taken along with the first spring (23), while at the same time the gear lever is rocked, such motion of the change gear slide taking place with the changing over of a driving part acting on the free end of the second spring (28) and keeping same against the end stop.

2. A gear box as claimed in claim 1, characterized in that the driving part is a simple electric driving or servo motor.

3. A gear box as claimed in claim 1, characterized in that the gear lever (10), that is fixedly joined to the change speed rod (8), is designed with two arms and each of the arms has a stop pin (20, 21) thereon, said arms stretching out in opposite directions from the change speed rod (8), the pre-selector lever (19), acted on by the first spring (23), is rested against one of the pins, the pre-selector lever (19) only being able to be rocked between the two stop pins (20, 21), it thereby running through a rocking point in which the force of the firxt spring (23) acting on it goes through a maximum.

4. A gear box as claimed in claim 1 or claim 2, characterized in that the pre-selector lever (19) may be freely turned on the change speed rod (8).

5. A gear box as claimed in any one of claims 1 to 4, characterized in that the change gear slide (25) has at least one slot (32), said slot (32) having a pin (31), fixed to the apparatus, running through it, said slot (32) furthermore being used for guiding the slide and forming the end stops (26, 27) with its ends.

6. A gear box as claimed in claim 5, characterized in that there are two slots (32, 33) in the change speed slide (25), the one end of the change speed rod (8) running through one of these slots.

7. A gear box as claimed in claim 6, characterized in that the end, running through the slot (33), of the change speed rod (8) is used to take up the rocking bearing of the pre-selector lever (19).

## Revendications

1. Engrenage de mise en marche, notamment pour l'entraînement d'un convoyeur à bande transversal d'un véhicule de récolte pourvu d'un levier de commande (10) à l'aide duquel, par l'intermédiaire d'une tige de commande (8), une bague de commande (2) à griffes (11), montée mobile sur un arbre de sortie (1) en étant solidaire en rotation de celui-ci, est susceptible, au choix, d'être mis en engagement avec l'une de deux roues d'engrenage (3, 4) qui sont montées librement rotatives sur l'arbre de sortie (1), de part et d'autre de la bague de commande, et entraînées dans des directions opposées, à partir d'une position médiane hors service ou d'arrêt, caractérisé en ce qu'au levier de commande (10) est associé un levier de présélection (19), à l'aide duquel un premier ressort (23) venant en prise avec le levier de présélection sollicite le levier de commande (10) dans la direction présélectionnée et le pousse contre un coulisseau de commande (25) qui est mobile entre une première et une seconde butée extrême (26, 27) et est en application contre la première butée extrême (26) sous l'effet d'un second ressort (28) en prise avec lui et maintient de cette manière le levier de commande (10) dans sa position médiane d'arrêt et en même temps le premier ressort à l'état de contrainte ou de tension, jusqu'à ce que le coulisseau de commande (25) vienne en application contre la second butée extrême (27), lors d'un changement de marche d'un organe de régulation en prise avec l'extrémité libre du second ressort (28) et maintenant le coulisseau en application contre la première butée extrême tout en etant entraîné par le premier ressort (23), avec pivotement simultané du levier de commande (10).

2. Engrenage de mise en marche selon la revendication 1, caractérisé en ce que l'organe de régulation est formé par un simple moteur de commande électrique.

3. Engrenage de mise en marche selon la revendication 1, caractérisé en ce que le levier de commande (10) solidaire de la tige de commande (8) est conformé en levier à deux bras et, porte des tenons de butée (20, 21) qui s'étendent vers les côtés opposés, à partir de la tige de commande (8), un tenon étant prévu sur chaque bras, et sur chacun desquels prend appui, sous l'effet du premier ressort (23), le levier de présélection (19) susceptible de pivoter seulement dans la zone située entre les deux tenons de butée (20, 21) en passant par une position de pivotement, avec sollicitation maximum par le premier ressort (23) venant en engagement avec lui.

4. Engrenage de mise en marche selon l'une des revendications 1 ou 2, caractérisé en ce que le levier de présélection (19) est monté librement rotatif sur la tige de commande (8).

5. Engrenage de mise en marche selon l'une des revendications 1 à 4, caractérisé en ce que le coulisseau de commande (25) comporte au moins un trou oblong (23) traversé par un tourillon (31) solidaire du dispositif, servant de guidage de coulisseau et formant, avec ses extrémités, les butées extrêmes (26, 27).

6. Engrenage de mise en marche selon la revendication 5, caractérisé en ce que dans le coulisseau de commande (25) sont prévus deux trous oblongs (32, 33) dont l'un est traversé par l'extrémité précitée de la tige de commande (8).

7. Engrenage de mise en marche selon la revendication 6, caractérisé en ce que l'extrémité de la tige de commande (8), qui traverse le trou oblong (33), sert de logement du palier de pivotement du levier de présélection (19).

Fig.1

Fig.2

Fig. 3